# EUROPÄISCHE PATENTANMELDUNG

(11) **EP 2 381 071 A1**
(43) Veröffentlichungstag der Anmeldung: **26.10.2011**
(21) Anmeldenummer: 10004244.9
(22) Anmeldetag: 21.04.2010
(51) Int. Cl.: F01D 25/30, F02K 1/04, F01D 25/16, B64D 33/04, F02K 1/82, F01D 5/14

(54) **Abgasdiffusor einer Gasturbine**

(71) Anmelder: Siemens Aktiengesellschaft, 80333 München (DE)
(72) Erfinder: Bröker, Marc, 46535 Dinslaken (DE); Buchal, Tobias, 40489 Düsseldorf (DE)

(57) **Zusammenfassung**

Die Erfindung betrifft einen Abgasdiffusor 10 für eine Gasturbine mit einem sich zum Diffusoraustritt 20 hin erweiternden Strömungskanal 22, in dessen Zentrum ein sich axial erstreckender Leitkörper 14 vorgesehen ist. Um einen weiter verkürzten Abgasdiffusor 10 anzugeben, dessen Leitkörper 14 eine besonders hohe Festigkeit aufweist und dessen Neigung zum strömungsbedingten Schwingen verringert ist, ist vorgesehen, dass der Leitkörper 14 zumindest in einem axialen Abschnitt seiner Längserstreckung eine Anzahl von einer über den Umfang verteilten, zwischen Leitelementen 32 angeordnete Vertiefungen 30 aufweist.

## Beschreibung

Die Erfindung bezieht sich auf einen Abgasdiffusor für eine Gasturbine mit einem sich zum Diffusoraustritt hin erweiternden Strömungskanal, in dessen Zentrum ein sich axial erstreckender Leitkörper vorgesehen ist.

Ein derartiger Abgasdiffusor dient zur Verzögerung der Abgasströmung einer Gasturbine und zur Rückgewinnung von zumindest eines Teils des Staudrucks. Um einen Abgasdiffusor mit einem vergleichsweisen großen Öffnungswinkel von 10° und mehr anzugeben, ist beispielsweise aus der DE 198 05 115 A1 bekannt, im Zentrum des Diffusorkanals einen sich axial erstreckenden Leitkörper vorzusehen. Durch die Verwendung des Leitkörpers wird der Abgasdiffusor als Ringdiffusor ausgebildet. Dadurch werden größere Gebiete von Rückströmungszonen hinter der Gasturbinennabe vermieden, was sich vorteilhaft auf den Wirkungsgrad des Abgasdiffusors auswirkt. Nachteilig ist jedoch, dass der Leitkörper vergleichsweise lang ist und aufgrund seiner Länge deswegen durch zusätzliche Streben abgestützt werden muss. Weiter sind die aerodynamischen Einflüsse der Lagerstreben unberücksichtigt.

Der Erfindung liegt daher die Aufgabe zugrunde, einen raumsparenden Abgasdiffusor für eine Gasturbine anzugeben, der zur Erzielung eines möglichst hohen Wirkungsgrads der Gasturbine eine Verbesserung des Druckrückgewinns ermöglicht. Weiterhin soll der Abgasdiffusor eine Vergleichmäßigung der Diffusorabströmung ermöglichen, so dass in einem der Gasturbinen nachgeschalteten Abhitzedampferzeuger eine möglichst homogene Einströmung des heißen Abgases aus der Gasturbine erfolgt.

Diese Aufgabe wird erfindungsgemäß gelöst durch einen Abgasdiffusor mit den Merkmalen des Anspruchs 1. Dazu weist der Leitkörper des gattungsgemäßen Abgasdiffusors zumindest in einem axialen Abschnitt seiner Längserstreckung eine Anzahl von über den Umfang verteilten, zwischen den Leitelementen angeordneten Vertiefungen auf.

Die Erfindung beruht auf der Erkenntnis, dass die an den Lagerstreben des hinteren Lagersterns bei verdrallter Anströmung ausgelösten Sekundärströmungen ausgenutzt werden sollten, um die Durchmischung hinter dem Nabenende zu verstärken und so die Länge von Rückstromzonen hinter der Nabe weiter zu verkürzen. Hierzu weist der Leitkörper des Abgasdiffusors, welcher als im Wesentlichen konischer oder zylindrischer Körper ausgebildet ist, über den Umfang verteilt Vertiefungen und Leitelemente auf, um die Sekundärströmungen optimal zu führen und zu verstärken. Die Sekundärströmungen führen Fluid von der Druckseite der Lagerstreben auf spiralartigen Bahnen. Durch die Verwendungen von Vertiefungen und Leitelementen können die Sekundärströmungen somit näher an die Mittelachse des Diffusors gelangen und der Lagerkörper kann kürzer ausgebildet werden als beim Stand der Technik, ohne dessen Effizienz dabei zu verringern. Durch die verkürzte Länge des Lagerkörpers kann dieser auch freistehend ausgebildet sein. Der besondere Vorteil der Erfindung liegt in der Ausnutzung der an den angestellten und/oder profilierten Lagerstreben erzeugten Sekundärströmungen, um mit Hilfe von nabenseitigen Vertiefungen Fluid noch näher zur Nabenachse zu leiten, um so die Größe und insbesondere die Länge der Rückströmzone hinter der Nabe weiter zu reduzieren. Dies führt zu einer weiter gesteigerten Effizienz des Abgasdiffusors.

In vorteilhafter Ausgestaltung weist der Leitkörper eine zur Mittelachse des Abgasdiffusors senkrecht angeordnete Querschnittskontur auf, welche sternförmig ist und dessen Zacken von den jeweiligen Leitelementen gebildet sind. Mit Hilfe der sternförmigen Querschnittskontur kann eine wesentlich höhere Festigkeit der Innenwand des nunmehr als Ringdiffusor ausgebildeten Abgasdiffusors erreicht werden. Die Neigung des Leitkörpers zum Schwingen aufgrund der Strömung wird dadurch wesentlich verringert. Folglich ist es auch möglich, den Leitkörper als nur einseitig befestigt auszugestalten, so dass dessen dem Diffusoraustritt zugewandtes Ende frei schwebend im Abgasdiffusor auskragt. Eine aerodynamisch störende sowie Kosten steigernde, ausströmseitige Abstützung des Leitkörpers kann folglich vermieden werden aufgrund der höheren Steifigkeit des Leitkörpers.

In zweckmäßiger Weiterbildung weist jedes Leitelement eine von der Mittelachse des Abgasdiffusors radial nach außen ragende äußere Spitze auf, deren kürzester Abstand zur Mittelachse (also im zur Mittelachse senkrecht angeordneten Querschnitt) sich mit abnehmendem axialem Abstand zum Diffusoraustritt verkleinert. Dabei weist jede Vertiefung einen radial innen angeordneten Grund auf, dessen kürzester Abstand zur Mittelachse (also im zur Mittelachse senkrecht angeordneten Querschnitt) sich mit abnehmendem axialem Abstand zum Diffusoraustritt ebenso verkleinert. Hierdurch wird eine Aufweitung des Strömungsquerschnitts des Abgasdiffusors auch nabenseitig erzielt, was zu einer weiteren Verkürzung der axialen Baulänge des Abgasdiffusors beiträgt. Die Strömungsquerschnittzunahme muss somit nicht lediglich über eine Vergrößerung des Durchmessers der äußeren Ringwand des Abgasdiffusors erreicht werden. Auch diese Maßnahme verringert die axiale Baulänge des Abgasdiffusors.

Gemäß einer weiteren vorteilhaften Ausbildung erstreckt sich jedes Leitelement entlang einer Spirallinie. Üblicherweise ist dabei die Steigung der Spirallinie vergleichsweise groß, so dass die Spirallinien lediglich geringfügig gegenüber der Mittelachse des Abgasdiffusors geneigt sind. Die Steigung kann sich auch entlang ihrer Erstreckung verkleinern. Vorzugsweise vergrößert sie sich doch, um eine möglichst drallarme Ausströmung aus dem Abgasdiffusor zu erhalten. Diese Anordnung ist insbesondere bei einem axialen Abgasdiffusor von Vorteil, bei der die Anzahl der Leitelemente gleich einer Anzahl von Lagerstreben ist, welche zur turbinenseitigen Lagerung des Gasturbinenrotors im Abgasdiffusor oder unmittelbar stromauf davon vorgesehen sind. Vorzugsweise ist jedes Leitelement - in der Strömungsrichtung des Abgasdiffusors betrachtet - in fluchtender Verlängerung der Lagerstreben angeordnet. Insbesondere hierdurch ist es möglich, die an den Lagerstreben des hinteren Lagersterns bei verdrallter Anströmung ausgelösten Sekundärströmungen auszunutzen, um die Durchmischung hinter dem Nabenende zu verstärken und eine verbesserte Druckrückgewinnung zu erreichen. Insbesondere die Sekundärströmungswirbel entlang der Druckseite der Lagerstreben können dann aerodynamisch besonders günstig in die Vertiefung des Leitkörpers geleitet werden, was nur vergleichsweise geringe aerodynamische Verluste mit sich bringt. Dabei kann vorgesehen sein, dass bereits in demjenigen axialen Abschnitt des Abgasdiffusors, in dem die Lagerstreben angeordnet sind, der Leitkörper zwischen den Streben eine in Umfangsrichtung bogenförmige Innenwandkontur aufweist, deren kürzester Abstand zur Mittelachse des Abgasdiffusors sich mit abnehmendem axialen Abstand zum Diffusoraustritt verkleinert. Mit anderen Worten: nicht alleine der sich an den Lagerstreben anschließende Leitkörper kann konisch ausgebildet sein, sondern die Innenwand des ringförmigen Abgasdiffusors im axialen Abschnitt der Lagerstreben kann auch schon bereits konisch ausgebildet sein, wobei auch deren Durchmesser zum austrittsseitigen Ende des Abgasdiffusors abnimmt.

Insbesondere im Fall eines der Gasturbine abgasseitig über den Abgasdiffusor nachgeschalteten Abhitzedampferzeugers wird eine Materialeinsparung durch Verkürzung begleitender Dampfleitungen zum Abhitzedampferzeuger oder Abhitzekessel erzielt. Ein entsprechender Abhitzedampferzeuger oder Kessel in liegender oder stehender Bauweise kann dann mit relativ geringer Heizfläche ausgestaltet sein, da diese in Folge einer vergleichsweise homogenen oder gleichmäßigeren Anströmung besser als bisher ausgenutzt wird. Damit sinkt der abgasseitige Druckverlust des Kessels, was wiederum einen Wirkungsgradgewinn der Gasturbine zur Folge hat. Ausführungsbeispiele der Erfindung werden anhand einer Zeichnung näher erläutert.

Darin zeigen:
- FIG 1: einen Abgasdiffusor einer Gasturbine in teils geschnittener, teils perspektivischer Darstellung mit einem im Zentrum angeordneten Leitkörper,
- FIG 2: den Querschnitt durch den Leitkörper gemäß FIG 1 in einer ersten Schnittdarstellung und
- FIG 3: den Leitkörper gemäß FIG 1 in einem zweiten Schnitt.

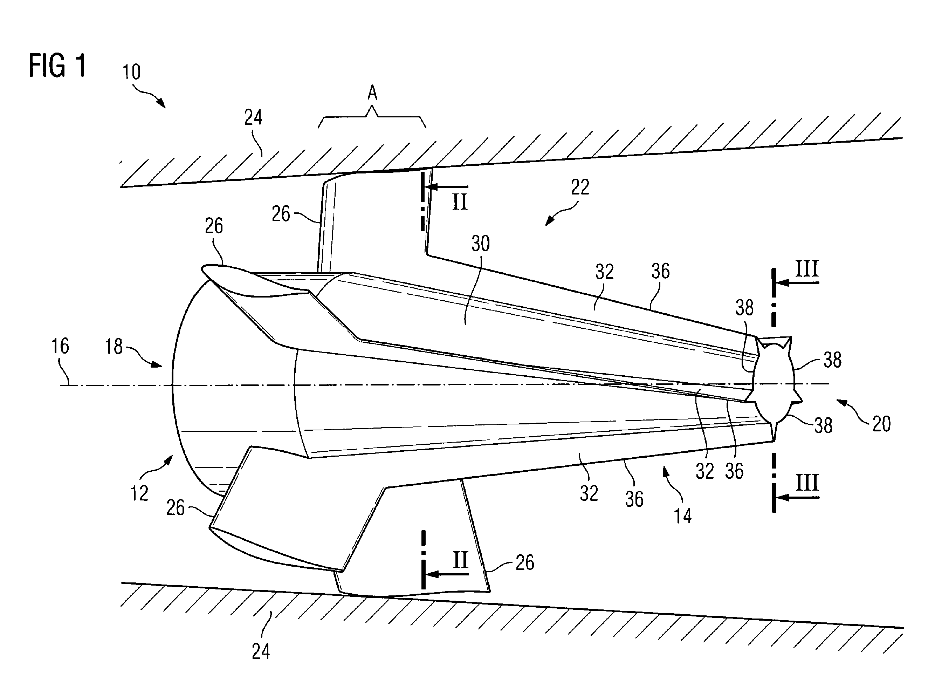

In FIG 1 ist ein Abgasdiffusor 10 für eine Gasturbine in einem Längsschnitt dargestellt, wobei der im Zentrum des Abgasdiffusors 10 angeordnete Lagerstern 12 zur turbinenseitigen Lagerung des Gasturbinenrotors und des daran angeordneten Leitkörpers 14 in perspektivischer Darstellung gezeigt sind. Der Abgasdiffusor 10 weist eine in seinem Zentrum liegende Mittelachse 16 auf, die sich von einem einströmseitigen Ende 18 zu einem ausströmseitigen Ende 20 erstreckt. Im Abgasdiffusor 10 ist ein Strömungskanal 22 vorgesehen, dessen im zur Mittelachse senkrecht stehender Querschnitt eine Ringkontur aufweist. Der Strömungskanal 22 ist dabei von einer radial außen angeordneten Außenwand 24 begrenzt. Im Zentrum des Abgasdiffusors 10, also im Bereich seiner Mittelachse 16, ist der Leitkörper 14 angeordnet und stellt dabei die radial innen angeordnete Begrenzung des Strömungskanals 22 dar. Der Leitkörper 14 wird dabei von fünf über den Umfang gleichmäßig oder auch ungleichmäßig verteilten Lagerstreben 26 gestützt. Im axialen Abschnitt A des Abgasdiffusors 10, in dem auch die Lagerstreben 26 angeordnet sind, endet im Inneren des Leitkörpers das turbinenseitige Ende des Gasturbinenrotors, welches aus Gründen der Übersichtlichkeit nicht dargestellt ist. Stromauf des Abschnitts A, also zum einströmseitigen Ende 18 hin, ist der Leitkörper 14 zylindrisch ausgebildet. Es ist vorgesehen, dass bereits im Abschnitt A der Leitkörper 14 zwischen den Lagerstreben 26 keine zylindrische Innenwandkontur aufweist, sondern dass bereits dort größer (tiefer) werdende Vertiefungen 30 vorgesehen sind. Stromab des Abschnitts A werden die über den Umfang des Leitkörpers 14 verteilten Vertiefungen 30 von Leitelementen 32 begrenzt, so dass abwechselnd Vertiefungen 30 und Leitelemente 32 in Tangentialrichtung angeordnet sind. Die Anzahl der Leitelemente 32 entspricht dabei der Anzahl der Lagerstreben 26, im dargestellten Ausführungsbeispiel sind jeweils fünf Leitelemente 32 und Lagerstreben 26 vorgesehen. Es können auch mehr oder weniger Leitelemente 32 bzw. Lagerstreben 26 vorgesehen sein. Sofern die Lagerstreben 26 über den Umfang ungleichmäßig verteilt sind, sind die Vertiefungen 30 und Leitelemente 32 einströmseitig dementsprechend ungleichmäßig verteilt. Ausströmseitig ist auf jeden Fall deren Gleichverteilung bevorzugt. Bekanntermaßen sind die Lagerstreben 26 aerodynamisch profiliert. Somit weisen die Lagerstreben 26 einen vorbestimmten Abströmwinkel, welcher auch von Turbinenschaufeln und Verdichterschaufeln bekannt ist, auf, in dessen aerodynamisch fluchtender Fortführung sich die Leitelemente 32 gegenüber der Mittelachse geneigt zum ausströmseitigen Ende 20 des Abgasdiffusors 10 hin verdrallen. Jedes Leitelement 32 weist eine nach außen ragende Spitze 36 auf, deren äußerster Punkt einen kürzesten Abstand zur Mittelachse des Abgasdiffusors 10 - für jeden beliebigen senkrecht zur Mittelachse 16 stehenden Querschnitt - aufweist, welcher Abstand sich mit abnehmendem axialen Abstand des Querschnitts zum Diffusoraustritt 20 verkleinert. Gleiches gilt für jede Vertiefung. Der kürzeste Abstand des radial innen angeordneten Grunds 38 zur Mittelachse 16 verkleinert sich mit abnehmendem axialem Abstand zum Diffusoraustritt. Dadurch erhält der Leitkörper 14 stromab seines Abschnitts A insgesamt eine konische Erscheinung, was dazu führt, dass die innere Querschnittsfläche des Leitkörpers, welche nicht von Abgas durchströmt wird, sich stetig verkleinert. Am Ende des Leitkörpers verbleibt somit nur ein vergleichsweise geringer Querschnitt, der zu Rückstromgebieten führen kann, die dementsprechend vergleichsweise kürzer und schwächer ausgebildet sind.

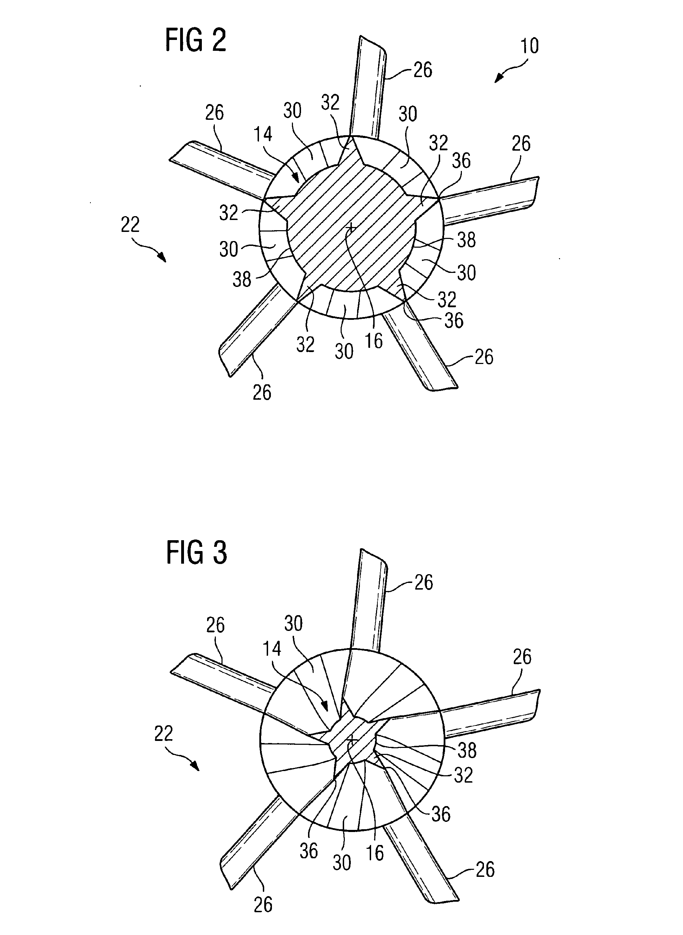

In den Figuren 2 und 3 sind die senkrecht zur Mittelachse 16 angeordneten Querschnittsansichten des Leitkörpers 14 gemäß der Schnitte II und III aus FIG 1 dargestellt. Dabei sind identische Merkmale mit identischen Bezugszeichen versehen.

Insgesamt gibt die Erfindung einen Abgasdiffusor 10 für eine Gasturbine an, mit einem sich zum Diffusoraustritt 20 hin erweiterten Strömungskanal 22, in dessen Zentrum ein sich axial erstreckender Leitkörper 14 vorgesehen ist. Um einen weiter verkürzten Abgasdiffusor 10 anzugeben, dessen Leitkörper 14 eine besonders hohe Festigkeit aufweist und dessen Neigung zum strömungsbedingten Schwingen verringert ist, ist vorgesehen, dass der Leitkörper 14 zumindest in einem axialen Abschnitt seiner Längserstreckung eine Anzahl von einer über den Umfang verteilten, zwischen Leitelementen 32 und angeordnete Vertiefungen 30 aufweist.

## Patentansprüche

1. Abgasdiffusor (10) für eine Gasturbine,
mit einem sich zum Diffusoraustritt hin erweiternden Strömungskanal (22), in dessen Zentrum ein sich axial erstreckender Leitkörper (14) vorgesehen ist,
**dadurch gekennzeichnet,**
**dass** der Leitkörper (14) zumindest in einem axialen Abschnitt seiner Längserstreckung eine Anzahl von über den Umfang verteilten, zwischen Leitelementen (32) angeordneten Vertiefungen (30) aufweist.

2. Abgasdiffusor (10) nach Anspruch 1,
bei dem der Leitkörper (14) eine zur Mittelachse (16) des Abgasdiffusors (10) senkrecht angeordnete Querschnittskontur aufweist, welche sternförmig ist und dessen Zacken von den jeweiligen Leitelementen (32) gebildet sind.

3. Abgasdiffusor (10) nach Anspruch 1 oder 2,
bei dem jedes Leitelement eine von der Mittelachse (16) des Abgasdiffusors (10) radial nach außen ragende Spitze (36) aufweist,
deren kürzester Abstand zur Mittelachse (16) des Abgasdiffusors (10) sich mit abnehmendem axialem Abstand zum Diffusoraustritt (20) verkleinert.

4. Abgasdiffusor (10) nach Anspruch 1, 2 oder 3,
bei dem jede Vertiefung (30) einen radial innen angeordneten Grund (38) aufweist,
dessen kürzester Abstand zur Mittelachse (16) des Abgasdiffusors (10) sich mit abnehmendem axialem Abstand zum Diffusoraustritt (20) verkleinert.

5. Abgasdiffusor (10) nach einem der vorangehenden Ansprüche,
bei dem entlang der Längserstreckung des Leitkörpers (14) jedes Leitelement (32) sich entlang einer Spirallinie erstreckt.

6. Abgasdiffusor (10) nach einem der vorangehenden Ansprüche,
bei dem der axiale Abschnitt des Leitkörpers (14) mit Vertiefungen (30) und Leitelementen (32) sich über die gesamte axiale Erstreckung des Leitkörpers (14) erstreckt.

7. Abgasdiffusor (10) nach einem der vorangehenden Ansprüche,
bei der die Anzahl der Leitelemente (32) gleich einer Anzahl von Lagerstreben (26) ist, welche zur turbinenseitigen Lagerung des Gasturbinenrotors vorgesehen sind.

8. Abgasdiffusor (10) nach Anspruch 7,
bei dem jedes Leitelement (32) - in Durchströmungsrichtung des Abgasdiffusors (10) betrachtet - in fluchtender Verlängerung der Lagerstreben (26) angeordnet ist.

9. Abgasdiffusor (10) nach Anspruch 7 oder 8,
bei dem im axialen Abschnitt (A) der Lagerstreben (26) eine in Umfangsrichtung bogenförmige Innenwandkontur zwischen den Lagerstreben (26) vorgesehen ist,
deren kürzester Abstand zur Mittelachse (16) des Abgasdiffusors (10) sich mit abnehmendem axialem Abstand zum Diffusoraustritt verkleinert.

10. Gasturbinenanlage mit einem Abgasdiffusor (10) nach einem der Ansprüche 1 bis 9.

11. Gasturbinenanlage nach Anspruch 10, mit einem dem Abgasdiffusor (10) nachgeschalteten Abhitzedampferzeuger.
